# EUROPÄISCHE PATENTSCHRIFT

(11) **EP 0 640 030 B1**
(45) Veröffentlichungstag und Bekanntmachung des Hinweises auf die Patenterteilung: **03.01.1996**
(21) Anmeldenummer: 93909353.0
(22) Anmeldetag: 30.04.1993
(51) Int. Cl.: B28B 23/00

(54) **VERFAHREN ZUM HERSTELLEN EINES LEICHTBAUTEILES IN PLATTEN- ODER QUADERFORM**
METHOD OF MANUFACTURING A LIGHTWEIGHT SQUARE OR PLATE-SHAPED COMPONENT
PROCEDE DE FABRICATION D'UN ELEMENT DE CONSTRUCTION LEGER SE PRESENTANT SOUS FORME DE PANNEAU OU DE CARREAU

(30) Priorität: 04.05.1992 DE 4214335
(43) Veröffentlichungstag der Anmeldung: 01.03.1995
(73) Patentinhaber: MEISTER, Helmut, D-77833 Ottersweier (DE)
(72) Erfinder: MEISTER, Helmut, D-77833 Ottersweier (DE)
(74) Vertreter: Zipse & Habersack
(86) Internationale Anmeldenummer: DE9300377
(87) Internationale Veröffentlichungsnummer: WO9322118

(56) Entgegenhaltungen:
- EP-A- 0 051 101
- WO-A-91/19058
- DE-A- 2 854 228
- DE-A- 4 003 726
- FR-A- 2 193 696
- FR-A- 2 298 658
- GB-A- 1 592 266
- US-A- 4 617 219
- DATABASE WPI Week 8041, Derwent Publications Ltd., London, GB; AN 80-72749C & JP A 55 035 261 (ASAHI CHEMICAL IND. K.K.) 13 September 1980

## Beschreibung

Die Erfindung betrifft ein Verfahren zum Herstellen eines Leichtbauteiles in Platten- oder Quaderform als Bauwerkstoff für tragende Konstruktionen für plattenförmige Beläge, Platten, Kacheln, Fliesen, Paneele od. dgl., bestehend aus einem platten- oder blockförmigen Grundwerkstoff aus Schaumstoff, Recyclinggranulat od. dgl. mit einem die Oberfläche bewehrenden und versteifenden Gewebe oder Geflecht, das durch ein Bindemittel festgehalten ist.

In der DE-A-34 23 006 ist ein derartiges Verfahren beschrieben, bei dem das Leichtbauteil aus einem Schaumstoffteil mit beiderseits aufgeklebtem Gewebe oder Geflecht besteht und zum Aufkleben von Verkleidungsplatten geeignet ist. Dabei wird das Gewebe oder Geflecht auf das Schaumstoffteil stramm aufgespannt und mit einem wasserbeständigen Dünnbettmörtel verklebt und glattgestrichen.

Ein so hergestelltes Leichtbauteil kann als Bauwerkstoff vielseitig verwendet werden, insbesondere kann es als tragende Konstruktion für plattenförmige Beläge, Platten, Kacheln, Fliesen, Paneele usw. benutzt werden. Das nach dem vorbekannten Verfahren hergestellte Leichtbauteil weist jedoch insofern gewisse Nachteile auf, als die Flankenhaftung des aufgeklebten Gewebes beim Bearbeiten durch Sägen und Fräsen nicht immer gegeben ist. So ist an den Schnittstellen zu beobachten, daß sich das Gewebe abhebt und somit an diesen Stellen die erforderliche Festigkeit des Leichtbauteiles nicht mehr gegeben ist.

Aus der DE-A-28 54 228 ist ein Verfahren zur Herstellung eines Gasbetonbauteils bekanntgeworden, bei dem auf das fertige Gasbetonteil ein- oder beidseitig oberflächlich eine Frischmörtelschicht aufgetragen und in den Frischmörtel mindestens eine Glasfasermatte eingedrückt wird. Auch bei diesem Gasbetonteil befindet sich also das Gewebe oder Geflecht unmittelbar auf seiner Oberfläche. Das Gasbetonteil entspricht so in seinem Aufbau im wesentlichen auch dem Leichtbauteil gemäß der DE-A-34 23 006.

Der vorliegenden Erfindung liegt nun die Aufgabe zugrunde, ein Verfahren zum Herstellen eines Leichtbauteiles in Platten- oder Quaderform zu schaffen, bei dem der oben genannte Nachteil vermieden wird und das danach hergestellte Leichtbauteil eine noch bessere Oberflächenfestigkeit aufweist.

Zur Lösung der gestellten Aufgabe wird ein Verfahren zum Herstellen eines Leichtbauteiles gemäß dem Oberbegriff des Patentanspruches 1 vorgeschlagen, welches dadurch gekennzeichnet ist, daß vor dem Einsatz des Gewebes oder Geflechts ein Raster in den Grundwerkstoff eingeformt wird, dessen Tiefe der Dicke des Gewebes oder Geflechts entspricht, worauf dann das Gewebe oder Geflecht in die rasterförmigen Aussparungen und Nuten eingesetzt wird, worauf die Oberfläche mit dem Bindemittel überzogen, glattgestrichen, gepreßt oder gewalzt wird, wobei das Gewebe oder Geflecht entsprechend seiner Dicke nur in den oberen Bereich des Grundwerkstoffes derart eingebettet ist, daß das Gewebe oder Geflecht mit der Oberfläche des Grundwerkstoffes zusammen mit dem Bindemittel eine ebene, glatte Oberfläche bildet.

Eine weitere Lösung der gestellten Aufgabe besteht in einem Verfahren zum Herstellen eines Leichtbauteils gemäß dem Oberbegriff des Patentanspruches 2, welches dadurch gekennzeichnet ist, daß vor dem Einsatz des Gewebes oder Geflechts ein Raster in den Grundwerkstoff eingeformt wird, dessen Tiefe der Dicke des Gewebes oder Geflechts entspricht, worauf auf die Oberfläche ein Bindemittel aufgebracht wird, das in die Rillen oder Nuten des Rasters eindringt und worauf dann das Gewebe oder Geflecht in die rasterförmigen Aussparungen und Nuten eingesetzt wird, worauf die Oberfläche, glattgestrichen, gepreßt oder gewalzt wird, wobei das Gewebe oder Geflecht entsprechend seiner Dicke nur in den oberen Bereich des Grundwerkstoffes derart eingebettet ist, daß das Gewebe oder Geflecht mit der Oberfläche des Grundwerkstoffes zusammen mit dem Bindemittel eine ebene, glatte Oberfläche bildet.

Eine weitere Lösung der gestellten Aufgabe besteht in einem Verfahren zum Herstellen eines Leichtbauteils gemäß dem Oberbegriff des Patentanspruches 3, welches dadurch gekennzeichnet ist, daß das Gewebe oder Geflecht in die verformbare oder vor dem Aushärten noch verformbare Oberfläche des platten- oder blockförmigen Grundwerkstoffes mittels einer auf ihrem Umfang mehrere profilierte Erhebungen aufweisenden Walze oder eines entsprechenden Preßstempels so eingedrückt wird, daß es mit der Oberfläche des Grundwerkstoffes eine Ebene bildet, worauf die Oberfläche mit dem Bindemittel überzogen und glattgestrichen, gepreßt und/ oder gewalzt wird, wobei das Gewebe oder Geflecht entsprechend seiner Dicke nur in den oberen Bereich des Grundwerkstoffes derart eingebettet ist, daß das Gewebe oder Geflecht mit der Oberfläche des Grundwerkstoffes zusammen mit dem Bindemittel eine ebene, glatte Oberfläche bildet.

Das Verfahren gemäß der Erfindung zeichnet sich also dadurch aus, daß das Gewebe oder Geflecht nur so tief in den oberen Bereich der Oberfläche des Grundwerkstoffes eingebettet wird, daß seine Oberfläche mit der Oberfläche des Grundwerkstoffes zusammen mit dem Bindemittel eine Ebene bildet. Auf diese Weise wird erreicht, daß das der Versteifung oder Verfestigung dienende Gewebe oder Geflecht durch das Einbetten in die Oberfläche des Grundwerkstoffes eine wesentlich bessere Flankenhaftung erreicht, wobei gleichzeitig auch eine größere Festigkeit der gesamten Oberfläche erzielt wird. Selbstverständlich können bei plattenförmigen Körpern beide Oberflächen derart hergestellt werden.

Der Grundwerkstoff kann aus Kunststoffen in Granulat- oder Faserform vorliegen, er kann aber auch aus Naturstoffen in Granulat- oder Faserform bestehen. Schließlich ist auch ein Recyclingwerkstoff in Form von Granulaten oder Fasern möglich. Als Bindemittel können künstliche Bindemittel verwendet werden, es können natürliche Bindemittel zur Anwendung gelangen, und ebenso können Kunst- und Naturbindemittel gemischt vorliegen. Für die Zusammensetzung und die Auswahl der Grundwerkstoffe und Bindemittel kann eine Unterscheidung bei der An- und Verwendung nach Naß-, Trocken-, Frostsicher- und Feuerfest-Bereichen erfolgen. Bei der Verwendung von Bindemitteln hat sich der flexibel eingestellte Dünnbettmörtel durch seine guten Eigenschaften in hervorragendem Maße bewährt. Es können aber auch Kalk- und Gipsbindemittel verwendet werden.

Im Zusammenwirken der Grundwerkstoffe und der Bindemittel entstehen nach entsprechendem Aushärten sogenannte "Halbfertigfabrikate" als starre Körper in Form von Platten oder Quadern in verschiedenen Stärken und Größen. Eine erforderliche erhöhte Verdichtung kann durch einen Preß- oder Walzvorgang erreicht werden.

Die Grundwerkstoffe können auch aus schon existenten Materialien als starre Körper, Platten- oder Blockformen vorliegen. Hierbei können extrudierte Hartschaumplatten und Blöcke, Schaumglasplatten und -blöcke, Naturfaser- und Glasfaserplatten, Papierfaserplatten und Platten aus Recyclinggranulat oder aus Faserplatten verwendet werden.

Anhand der Zeichnungen soll das Verfahren gemäß der Erfindung näher erläutert werden.

In den Zeichnungen zeigt
- Fig. 1: eine prinzipielle Darstellung einer Vorrichtung zur Durchführung des Verfahrens.
- Fig. 2: zeigt eine Draufsicht auf Fig. 1.
- Fig. 3: zeigt eine Seitenansicht einer Vorrichtung zur Durchführung des Verfahrens mit Hilfe einer Presse.

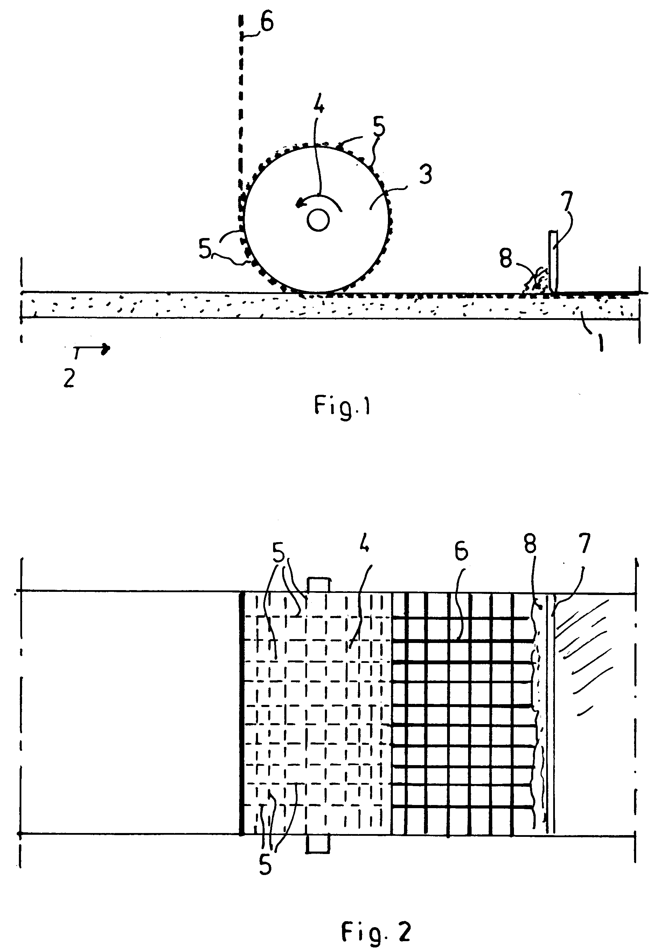

Wie sich aus den Figuren 1 und 2 ergibt, wird auf einer nicht dargestellten Transportvorrichtung ein Rohling oder ein plattenförmiger Grundwerkstoff 1 aus beliebigem Material in Richtung des Pfeiles 2 bewegt. Über dem Grundwerkstoff ist eine Walze 3 vorgesehen, die in Richtung des Pfeiles 4 angetrieben wird. Die Walze weist auf ihrem Umfang mehrere profilierte Erhebungen 5 auf, auf die ein mitgeführtes Gewebe oder Geflecht 6 aufgelegt wird. Beim Berühren der Walze 3 mit dem Grundwerkstoff 1 wird das Gewebe oder Geflecht 6 so in die Oberfläche eingedrückt, daß es mit der Oberfläche des Grundwerkstoffes eine glatte Ebene bildet. Ferner ist ein Abstreifer 7 vorgesehen, hinter dem sich das Bindemittel 8, vorzugsweise ein Dünnbettmörtel, befindet. Durch den Abstreifer 7 wird ein Glattstrich erzielt, so daß hinter dem Abstreifer 7 eine vollkommen glatte und ebene Oberfläche 9 entsteht. Anstelle des Abstreifers 7 kann auch eine andere Vorrichtung zum Aufbringen des Bindemittels vorgesehen sein, wobei das Bindemittel eingewalzt oder eingepreßt wird.

In Abwandung der in den Figuren 1 und 2 dargestellten Anordnung kann bei einem Grundwerkstoff, dessen Oberfläche bereits hart bzw. ausgehärtet ist, eine Fräsvorrichtung eingesetzt werden, die entsprechend dem Gewebe oder Geflecht 6 rasterförmige Nuten oder Rillen einfräst, wobei dann mittels einer glatten Walze das Gewebe oder Geflecht in die Oberfläche des Grundwerkstoffes 1 eingelegt wird. Das Einfräsen der Nuten oder Rillen erfolgt dabei nur so tief, daß das Gewebe oder Geflecht mit der Oberfläche des Grundwerkstoffes eine glatte Ebene bildet, die dann durch das Bindemittel zu einer vollständig glatten Fläche gebracht wird.

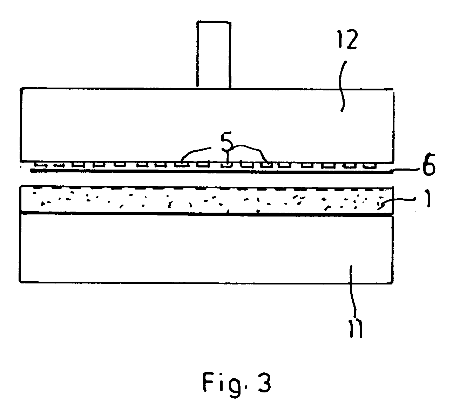

In Fig. 3 ist eine andere Möglichkeit dargestellt. Dort ist in einer Presse mit einer Matrix 11 der plattenförmige Grundwerkstoff 1 eingelegt. Mittels des Preßstempels 12 wird nun das Gewebe oder Geflecht 6 in die noch verformbare Oberfläche des Grundwerkkstoffes 1 so weit eingepreßt, daß das Gewebe oder Geflecht mit der Oberfläche eine Ebene bildet. Anschließend wird in einem weiteren Verfahrensschritt die Oberfläche des Grundwerkstoffes 1 mit Bindemittel überzogen und glattgestrichen, glattgepreßt oder glattgewalzt. Selbstverständlich kann das Verfahren auf beiden Flächen des plattenförmigen Grundwerkstoffes angewendet werden.

Es ist auch möglich, ein- oder beidseitig den Werkstoff rasterförmig mit Nuten oder Rillen zu versehen, wobei auf die Oberfläche zunächst das Bindemittel aufgebracht wird, so daß es in die Rillen oder Nuten eindringt, worauf anschließend das Gewebe oder Geflecht in die Nuten oder Rillen eingepreßt wird. Schließlich wird die Oberfläche glattgestrichen, -gepreßt oder -gewalzt.

Die in der Zusammensetzung unterschiedlichen Grundwerkstoffe 1 werden also, je nach eigener Festigkeit, durch eine Stanzwalze, durch Fräsen oder in einem Preß- und Druckverfahren mit einem Gitterraster in verschiedener Größe und Stärke versehen, das der Aufnahme von Glasgitter-, Kunststoff- oder Metallgewebe dient.

Die Tiefen der Gitterraster sind so gewählt, daß entsprechend dem Anspruch der statischen Stabilität und der Stärke des Gewebes dieses mit der Oberfläche des Grundwerkstoffes abschließt. Die Be- und Verfestigung des Gewebes wird im Spachtel-, Gieß- oder Spritzverfahren durchgeführt, wobei das Bindemittel, insbesondere ein Dünnbettmörtel, in das Gitterraster eingebracht wird. Es können selbstverständlich auch andere Bindemittel, je nach Anforderung der Platten und Formen, gewählt werden, wobei das Gittergewebe mit einer Walze oder im Druck- und Preßverfahren in das vorbereitete Raster eingedrückt wird.

Durch das Verfahren gemäß der Erfindung wird ein platten- oder quaderförmiges Leichtbauteil geschaffen, dessen Gewebe infolge der beschriebenen Einbettung eine hohe Flankenhaftung aufweist. Außerdem wird nach dem Aushärten des Bindemittels eine hohe Stabilität erreicht. Zur Sicherung und Einschränkung der Verformung werden beiderseitig Gitterraster auf dem platten- bzw. blockförmigen Grundwerkstoff vorgesehen. Dadurch wird ein fester Ober- und Untergurt an der Oberfläche der Grundwerkstoffe erzielt. Zum Erhöhen der statischen Stabilität kann zusätzlich an der Oberfläche der Grundwerkstoffe ein Glasvlies oder ein dünnes Glasgittergewebe mit entsprechendem Bindemittel aufgebracht werden. Die Bindemittel- bzw. Mörtelschicht entspricht der Stärke des Glasvlieses oder Glasgittergewebes. Ferner läßt sich die Stabilität steigern, indem relativ dünne Plattenschichten im Sandwich-Verfahren verbunden werden. Dadurch lassen sich auch Belagsträgerelemente herstellen.

Die Leichtbauteile gemäß der Erfindung können in vorteilhafter Weise auch zur Schall- und Wärmedämmung benutzt werden, wobei hervorzuheben ist, daß bei besonders ausgewählten Werkstoffen diese auch einem erhöhten Druck, einem Wassereinfluß und einer erhöhten Hitzeeinwirkung standhalten können. Die Feuerbeständigkeit ist also gewährleistet.

Die mit dem Verfahren gemäß der Erfindung hergestellten Bauteile weisen folgende Vorteile auf:
1. Durch die geringe Mörtel- bzw. Bindemittelschicht ergeben sich insgesamt ein leichtes Gewicht und eine leichte Be- und Verarbeitung.
2. Mit der Gewebeeinbettung wird selbst bei labilen Grundwerkstoffen eine hohe statische Stabilität erreicht, wobei die Gewebearmierung zugleich die Rißbewehrung gegenüber Verkleidungsbelägen, wie Fliesen, dünnen Natursteinfurnieren und Platten sowie dünnen Putzschichten, übernimmt.
3. Mit der Gewebeeinbettung ergibt sich auch eine außerordentlich große Flankenhaftung beim Bearbeiten, d. h. ein "Ausfransen" des Gewebes tritt nicht auf.
4. Bei entsprechender Auswahl der Grundwerkstoffe ergeben sich fast unbegrenzte Verwendungsmöglichkeiten, wodurch sich in vielen Bereichen die Bauteile als Fertigteile herstellen lassen, mit den daraus resultierenden Einsparungen bei den Lohn- und Transportkosten.

## Patentansprüche

1. Verfahren zum Herstellen eines Leichtbauteiles in Platten- oder Quaderform als Bauwerkstoff für tragende Konstruktionen für plattenförmige Beläge, Platten, Kacheln, Fliesen, Paneele od. dgl., bestehend aus einem platten- oder blockförmigen Grundwerkstoff aus Schaumstoff, Recyclinggranulat od. dgl. mit einem die Oberfläche bewehrenden und versteifenden Gewebe oder Geflecht, das durch ein Bindemittel festgehalten ist, **dadurch gekennzeichnet**, daß vor dem Einsatz des Gewebes oder Geflechts ein Raster in den Grundwerkstoff eingeformt wird, dessen Tiefe der Dicke des Gewebes oder Geflechts entspricht, worauf dann das Gewebe oder Geflecht in die rasterförmigen Aussparungen und Nuten eingesetzt wird, worauf die Oberfläche mit dem Bindemittel überzogen, glattgestrichen, gepreßt oder gewalzt wird, wobei das Gewebe oder Geflecht entsprechend seiner Dicke nur in den oberen Bereich des Grundwerkstoffes derart eingebettet ist, daß das Gewebe oder Geflecht mit der Oberfläche des Grundwerkstoffes zusammen mit dem Bindemittel eine ebene, glatte Oberfläche bildet.

2. Verfahren zum Herstellen eines Leichtbauteiles in Platten- oder Quaderform als Bauwerkstoff für tragende Konstruktionen für plattenförmige Beläge, Platten, Kacheln, Fliesen, Paneele od. dgl., bestehend aus einem platten- oder blockförmigen Grundwerkstoff aus Schaumstoff, Recyclinggranulat od. dgl. mit einem die Oberfläche bewehrenden und versteifenden Gewebe oder Geflecht, das durch ein Bindemittel festgehalten ist, **dadurch gekennzeichnet**, daß vor dem Einsatz des Gewebes oder Geflechts ein Raster in den Grundwerkstoff eingeformt wird, dessen Tiefe der Dicke des Gewebes oder Geflechts entspricht, worauf auf die Oberfläche ein Bindemittel aufgebracht wird, das in die Rillen oder Nuten des Rasters eindringt und worauf dann das Gewebe oder Geflecht in die rasterförmigen Aussparungen und Nuten eingesetzt wird, worauf die Oberfläche, glattgestrichen, gepreßt oder gewalzt wird, wobei das Gewebe oder Geflecht entsprechend seiner Dicke nur in den oberen Bereich des Grundwerkstoffes derart eingebettet ist, daß das Gewebe oder Geflecht mit der Oberfläche des Grundwerkstoffes zusammen mit dem Bindemittel eine ebene, glatte Oberfläche bildet.

3. Verfahren zum Herstellen eines Leichtbauteiles in Platten- oder Quaderform als Bauwerkstoff für tragende Konstruktionen für plattenförmige Beläge, Platten, Kacheln, Fliesen, Paneele od. dgl. , bestehend aus einem platten- oder blockförmigen Grundwerkstoff aus Schaumstoff, Recyclinggranulat od. dgl. mit einem die Oberfläche bewehrenden und versteifenden Gewebe oder Geflecht, das durch ein Bindemittel festgehalten ist, **dadurch gekennzeichnet**, daß das Gewebe oder Geflecht in die verformbare oder vor dem Aushärten noch verformbare Oberfläche des platten- oder blockförmigen Grundwerkstoffes mittels einer auf ihrem Umfang mehrere profilierte Erhebungen aufweisenden Walze oder eines entsprechenden Preßstempels so eingedrückt wird, daß es mit der Oberfläche des Grundwerkstoffes eine Ebene bildet, worauf die Oberfläche mit dem Bindemittel überzogen und glattgestrichen, gepreßt und/oder gewalzt wird, wobei das Gewebe oder Geflecht entsprechend seiner Dicke nur in den oberen Bereich des Grundwerkstoffes derart eingebettet ist, daß das Gewebe oder Geflecht mit der Oberfläche des Grundwerkstoffes zusammen mit dem Bindemittel eine ebene, glatte Oberfläche bildet.

4. Verfahren nach einem oder mehreren der vorhergehenden Ansprüche, **dadurch gekennzeichnet**, daß als Bindemittel künstliche Bindemittel, Naturbindemittel oder Mischungen aus künstlichen und Naturbindemitteln verwendet werden.

5. Verfahren nach einem der Ansprüche 1 bis 3, **dadurch gekennzeichnet**, daß als Bindemittel Dünnbettmörtel verwendet wird.

6. Verfahren nach einem der Ansprüche 1 bis 3, **dadurch gekennzeichnet**, daß als Bindemittel Kalk- oder Gipsbindemittel verwendet werden.

## Claims

1. Method of manufacturing a lightweight plate-shaped or square building component as building material for load-bearing structures for board-type linings, boards, tiles, flags, panels etc., consisting of a plate- or block-shaped base material of foam, recycled granules or similar with a fabric or textile, which is secured by a binder, to protect and strengthen the surface, characterised in that, before the introduction of the textile or fabric, a grid is formed in the base material, the depth of which corresponds to the thickness of the textile or fabric, whereafter the textile or fabric is then introduced into the grid-like cavities and grooves, whereafter the surface is overcoated with the binder, brushed, pressed or rolled smooth, so that the textile or fabric is embedded only in the upper layer of the base material according to its thickness in such a way that the textile or fabric forms a level, smooth face with the surface of the base material together with the binder.

2. Method of manufacturing a lightweight plate-shaped or square building component as building material for load-bearing structures for board-type linings, boards, tiles, flags, panels etc., consisting of a plate- or block-shaped base material of foam, recycled granules or similar with a fabric or textile, which is secured by a binder, to protect and strengthen the surface, characterised in that, before the introduction of the textile or fabric, a grid is formed in the base material, the depth of which corresponds to the thickness of the textile or fabric, whereafter a binder is applied to the surface which penetrates the grooves or channels of the grid and whereafter the textile or fabric is then introduced into the grid-like cavities and grooves, whereafter the surface is brushed, pressed or rolled smooth, so that the textile or fabric is embedded only in the upper layer of the base material according to its thickness in such a way that the textile or fabric forms a level, smooth face with the surface of the base material together with the binder.

3. Method of manufacturing a lightweight plate-shaped or square building component as building material for load-bearing structures for board-type linings, boards, tiles, flags, panels etc., consisting of a plate- or block-shaped base material of foam, recycled granules or similar with a fabric or textile, which is secured by a binder, to protect and strengthen the surface, characterised in that the textile or fabric is so pressed into the surface, which is shapeable or still shapeable before hardening, of the plate- or block-shaped base material by means of a roller which has several profiled elevations around its circumference or a corresponding pressure die that it forms a surface level with that of the base material, whereafter the surface is overcoated with the binder and brushed, pressed and/or rolled smooth, so that the textile or fabric is embedded only into the upper layer of the base material corresponding to its thickness, in such a way that the textile or fabric forms a level, smooth face with the surface of the base material together with the binder.

4. Method according to one or more of the preceding claims, characterised in that synthetic or natural binders or mixtures of synthetic and natural binders are used as binders.

5. Method according to one of claims 1 to 3, characterised in that thin-bed mortar is used as the binder.

6. Method according to one of claims 1 to 3, characterised in that lime- or gypsum-based binders are used as the binder.

## Revendications

1. Procédé de fabrication d'un élément de construction léger se présentant sous forme de panneaux ou de carreaux, à titre de matériau de construction pour des constructions porteuses destinées à des garnitures se présentant sous forme de panneaux, des plaques, des carreaux de faïence, des dalles de carrelage, des panneaux de lambris ou analogues, constitué d'un matériau de base se présentant sous forme de panneaux ou de blocs, en substance alvéolaire, en granulat de recyclage ou analogues, avec un tissage ou un tressage armant et rigidifiant la surface et fixé par liant, caractérisé en ce que, avant la mise en oeuvre du tissage ou du tressage, est formée dans le matériau de base une trame dont la profondeur correspond à l'épaisseur du tissage ou du tressage, suite à quoi le tissage ou le tressage est placé dans les évidements et rainures en forme de trame, puis la surface est recouverte du liant, lissée, pressée ou laminée, le tissu ou le tressage étant noyé, en fonction de son épaisseur, uniquement dans la zone supérieure du matériau de base, de sorte que le tissage ou le tressage constitue avec la surface du matériau de base conjointement avec le liant une surface plane lisse.

2. Procédé de fabrication d'un élément de construction léger sous forme de panneaux ou de carreaux, à titre de matériau de construction pour des constructions porteuses destinées à des garnitures se présentant sous forme de plaques, des carreaux de faïence, des dalles de carrelage, des panneaux de lambris ou analogues, constitué d'un matériau de base se présentant sous forme de panneaux ou de blocs, en substance alvéolaire, en granulats de recyclage ou analogues avec un tissage ou un tressage armant et rigidifiant la surface, et fixé par liant, caractérisé en ce que, avant la mise en oeuvre du tissage ou du tressage, est formée dans le matériau de base une trame dont la profondeur correspond à l'épaisseur du tissage ou du tressage, suite à quoi sur la surface est appliqué un liant qui pénètre dans les cannelures ou rainures de la trame et suite à quoi ensuite le tissage ou le tressage est inséré dans les évidements et rainures en forme de trame, puis la surface est l'objet d'un lissage, d'un pressage ou d'un laminage, le tissage ou le tressage étant noyé seulement dans la zone supérieure du matériau de base, en fonction de son épaisseur, de sorte que le tissage ou le tressage constitue avec la surface du matériau de base, conjointement avec le liant, une surface plane lisse.

3. Procédé de fabrication d'un élément de construction léger se présentant sous forme de panneaux ou de carreaux, à titre de matériau de construction pour des constructions porteuses destinées à des garnitures se présentant sous forme de plaques, des carreaux de faïence, des dalles de carrelage, des panneaux de lambris ou analogues, constitué d'un matériau de base se présentant sous forme de panneaux ou de blocs, en substance alvéolaire, en granulats de recyclage ou analogues avec un tissage ou un tressage armant et rigidifiant la surface, et fixé par liant, caractérisé en ce que le tissage ou le tressage est enfoncé dans la surface, déformable ou encore déformable avant durcissement, du matériau de base se présentant sous forme de plaques ou sous forme de blocs, au moyen d'un rouleau présentant plusieurs bossages profilés répartis sur sa périphérie ou bien au moyen d'un poinçon de pressage correspondant, l'enfoncement étant tel qu'avec la surface du matériau de base est constitué un plan, puis la surface est enduite avec le liant et lissée, pressée et/ou laminée, le tissage ou le tressage étant noyé seulement dans la zone supérieure du matériau de base, en fonction de son épaisseur, de sorte que le tissage ou le tressage constitue avec la surface du matériau de base, conjointement avec le liant, une surface lisse plane.

4. Procédé selon l'une ou plusieurs des revendications précédentes, caractérisé en ce que l'on utilise comme liant, un liant synthétique, un liant naturel ou bien des mélanges de liants synthétiques et naturels.

5. Procédé selon l'une des revendications 1 à 3, caractérisé en ce que l'on utilise comme liant un mortier à lit fluide.

6. Procédé selon l'une des revendications 1 à 3, caractérisé en ce que l'on utilise comme liant un liant à base de chaux ou de gypse.
